# EUROPEAN PATENT APPLICATION

(11) **EP 4 012 265 A1**
(43) Date of publication of application: **15.06.2022**
(21) Application number: 21212357.4
(22) Date of filing: 03.12.2021
(51) Int. Cl.: F24C 15/00, F24C 15/32

(54) **STEAM GENERATOR**

(30) Priority: 11.12.2020 US 202017119667
(71) Applicant: WHIRLPOOL CORPORATION, Benton Harbor Michigan 49022 (US)
(72) Inventor: Aielli, Giordano, 21024 Cassinetta di Biandronno (VA) (IT)
(74) Representative: Spina, Alessandro

(57) **Abstract**

A steam generator (22) for a cooking appliance (10) is provided. The steam generator (22) includes a warm tank (40) having a water inlet (28). The steam generator (22) also includes a heating element (42) configured to heat water in the warm tank (40) to produce steam to be directed into an oven cavity (14) of the cooking appliance (10). The steam generator (22) further includes one or more cold tanks (36, 36A, 36B) connected to a supply of water and an output configured to provide water to the water inlet (28) of the warm tank (40).

## Description

### TECHNICAL FIELD

Aspects of the disclosure generally relate to modular steam generators for cooking appliances.

### BACKGROUND

Conventional cooking appliances, such as ovens, typically include a cabinet containing a housing defining a cooking chamber and having a heating system for cooking food. Some cooking appliances introduce water in the form of steam into the cooking chamber to facilitate the cooking process, such as in the baking of bread and pastries. Such cooking appliances use a steam generator that changes the phase of water from liquid to steam by heating liquid water. The steam is then introduced into the cooking chamber.

### SUMMARY

In a first illustrative example, a steam generator for a cooking appliance is provided. The steam generator includes a warm tank having a water inlet. The steam generator also includes a heating element configured to heat water in the warm tank to produce steam to be directed into an oven cavity of the cooking appliance. The steam generator further includes one or more cold tanks connected to a supply of water and an output configured to provide water to the water inlet of the warm tank.

In some examples, the one or more cold tanks include a first cold tank having an input connected to the supply of water and an output; and a second cold tank having an input connected to the output of the first cold tank and an output configured to provide the water to the water inlet of the warm tank.

In some examples, the steam generator further includes a water flow control device disposed between the cold tanks and the water inlet of the warm tank, and a controller programmed to control a state of the water flow control device to supply water from the cold tanks into the warm tank.

In some examples, the controller is further programmed to control the water flow control device to continuously introduce a fixed rate of water into the warm tank from the cold tanks for consistent production of steam.

In some examples, the controller is further programmed to control the water flow control device to periodically introduce a quantity of water into the warm tank from the cold tanks for consistent production of steam.

In some examples, the steam generator further includes a water flow control device disposed between the first cold tank and the second cold tank; and a controller programmed to control a state of the water flow control device to supply water between the first cold tank and the second cold tank.

In some examples, the first cold tank is configured to hold a first quantity of water, and the second cold tank is configured to hold a second quantity of water different from the first quantity of water. In some examples, the warm tank is configured to hold a smaller quantity of water than either the first cold tank or the second cold tank. In some examples, the warm tank includes an outlet, and further comprising a drain device configured to withdraw remaining water from the warm tank after steam production.

In some examples, the drain device includes an outlet such that the remaining water is recirculated back to the one or more cold tanks. In some examples, the drain device includes an outlet such that the remaining water can be drained. In some examples, the drain device is a pump.

In some examples, the steam generator further includes a fill device configured to fill the one or more cold tanks from a water supply. In some examples, the fill device is a pump.

In another illustrative example, a method for steam generation for the cooking appliance is provided. A fill device is operated to fill a plurality of cold tanks from a water source. A water flow control device is operated to introduce a quality of water from the plurality of cold tanks into the warm tank. The heating element of the warm tank is activated to heat the introduced water into steam. The steam is provided through a cavity inlet into a cooking chamber of the cooking appliance.

### BRIEF DESCRIPTION OF THE DRAWINGS

FIG. 1 illustrates a cooking appliance in the form of an oven according to an aspect of the disclosure;
FIG. 2 illustrates an example steam system for the cooking appliance according to an aspect of the disclosure; and
FIG. 3 illustrates an example process for operating the steam system according to an aspect of the disclosure.

### DETAILED DESCRIPTION

As required, detailed embodiments of the present invention are disclosed herein; however, it is to be understood that the disclosed embodiments are merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention.

Aspects of the disclosure generally relate to a modular steam generator for a cooking appliance. As explained in detail herein, as opposed to systems that include a single water reservoir, the disclosed steam generator includes multiple configurable water storage tanks. A warm tank is configured to generate steam quickly from a small quantity of water, while one or more cold tank modules are configured to maintain overall water capacity for the stream generator system. A water flow control device is provided between the one or more cold tanks and the warm tank. The water flow control device is used to control the flow of water from the one or more cold tanks to the warm tank, so as to keep the steam rate constant. By virtue of being modular, the tanks of the steam generator may be configured to more easily fit into different configurations of oven architecture (e.g., combi steam ovens, microwave combi steam ovens, etc.). Thus, the disclosed system is modular with respect to the total volume of water of the system while also retaining good performance of the steam generator (e.g., steam rate).

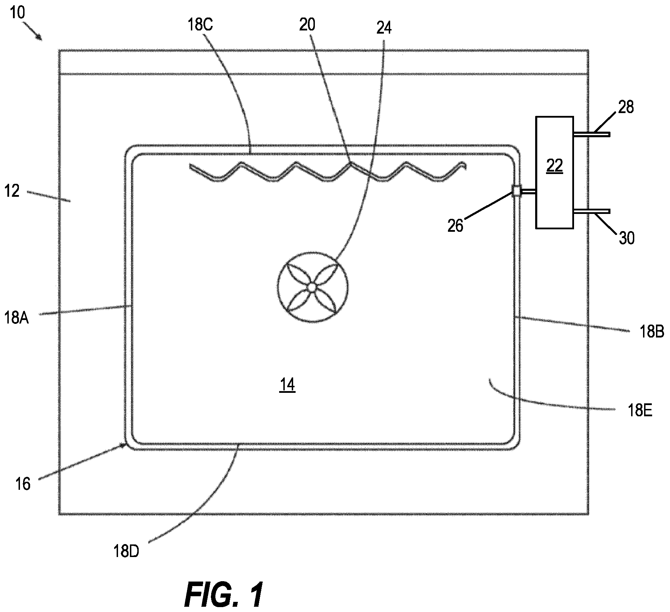

FIG. 1 schematically illustrates a cooking appliance 10 according to an aspect of the disclosure. The cooking appliance 10 generally includes a cabinet 12 with an open-face cooking chamber 14 defined by a housing 16. In the illustrated example, the housing 16 includes a pair of spaced sides 18A, 18B, joined by a top 18C, bottom 18D, and rear 18E. A door (not shown) selectively closes the cooking chamber 14. When the door is in the open position, a user can access the cooking chamber. When the door is in the closed position, access to the cooking chamber 14 is prevented and the cooking chamber 14 is sealed from the external environment.

The cooking appliance 10 further comprises a heating system for heating food placed in the cooking chamber 14. As illustrated, the heating system comprises at least one heating element 20, which in the illustrated example is shown as an electric heating element. The heating element 20 may be mounted in any position suitable for heating the air in the cooking chamber 14, such as outside the cooking chamber 14 or at one of its sides. Multiple heating elements 20 may be mounted in any combination of positions. It should be noted this is only an example, and other types of heating elements may be used, such as gas burners or magnetrons. Thus, while the cooking appliance 10 is illustrated as a conventional oven, the cooking appliance may be another type of cooking appliance 10 that has a cooking chamber 14 in which food is heated, such as a microwave oven, or a combination microwave and conventional oven (*e.g*., a combi oven).

The cooking appliance 10 further includes a steam generator 22 configured to produce steam to be provided into the cooking chamber 14. The steam may be introduced into the cooking chamber 14 through a cavity inlet 26. Steam may be introduced for various purposes, such as to aid in the cooking of food or to facilitate the cleaning of the cooking chamber 14.

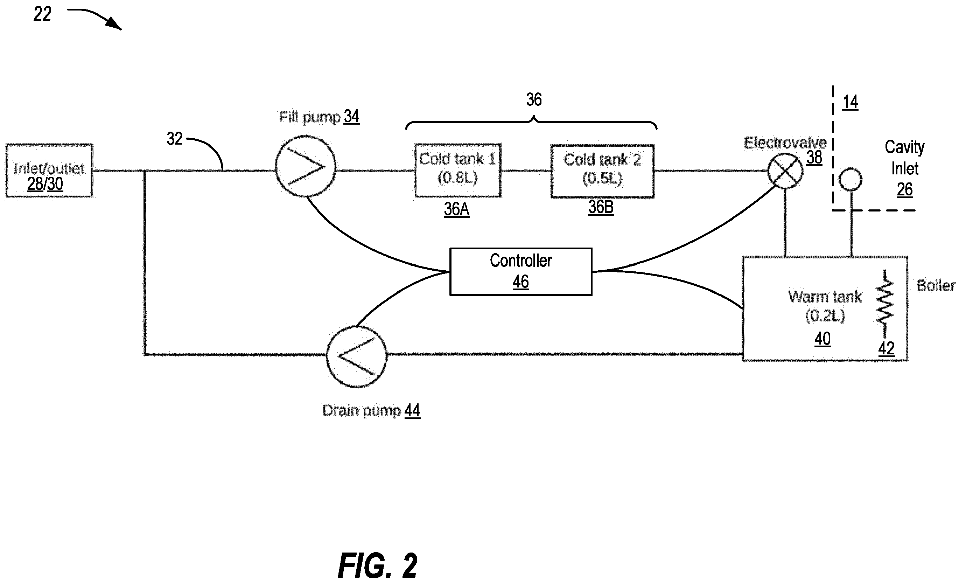

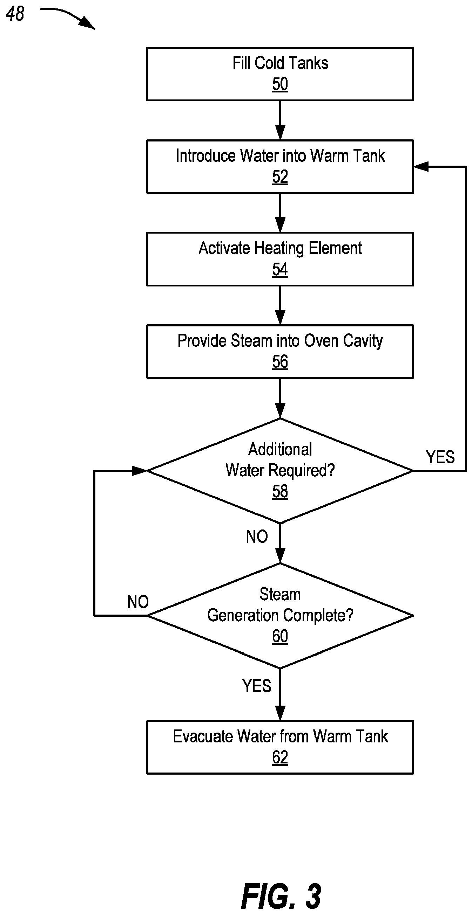

The steam generator 22 may be configured to receive water via a water inlet 28 for use in the generation of steam. In one example, the water inlet 28 is connected to a water supply such as municipal plumbing. In another example, the water inlet 28 is connected to a water supply in the form of an opening, *e.g*., a funnel at the top of the oven, adapted to receive liquid water. In yet another example, a quick coupling system may be used, where a tube is coupled to a hidden water inlet 28 in the front panel of the cooking appliance 10, which can be connected to an external reservoir to suck in water. The steam generator 22 may also be configured to drain water from the entire steam generation system of the cooking appliance 10 by way of a water outlet 30. It should be noted that while the steam generator 22 is shown in FIG. 1 as being included within the cooking appliance 10, in other examples some or all of the components of the steam generator 22 may be external to the cooking appliance 10. Aspects of the operation of the steam generator 22 are discussed in greater detail with respect to FIGS. 2 and 3.

The cooking appliance 10 may also optionally include a circulation system 24 that circulates air (and steam, when present) within the cooking chamber 14. The circulation system 24 may include any suitable system providing circulation, such as a fan, and may be mounted in any suitable location of the cooking chamber 14, such as in the rear or at the top. In some examples, the circulation system 24 is operated in the cooking chamber 14 based on cooking settings that desire a uniform distribution of steam. Additionally, the heating system may include the convection heating element 20 in the airflow of the circulation system 24 that may be engaged to increase the temperature of the air (and steam) within the cooking chamber 14. This may aid in the cooking of food in the cooking chamber 14 at a high and consistent temperature.

FIG. 2 illustrates further aspects of the steam generator 22 for use in the cooking appliance 10. As shown in greater detail, the water inlet 28 as illustrated in FIG. 1 provides a water connection to a loop 32 internal to the steam generator 22. Following the water flow direction of the loop 32, the loop 32 may include a fill device 34 that supplies water from the water inlet 28 into one or more modular cold tanks 36 (two are shown, as cold tanks 36A and 36B, but this is only one example and more or fewer cold tanks 36 may be used). It should also be noted that in some examples the fill device 34 may be omitted, and water may instead flow into the cold tanks 36 by gravity. The cold tanks 36, in turn, connect to a water flow control device 38 that controls the flow of the water from the cold tanks 36 into a warm tank 40. The warm tank 40 includes a heating element 42 to heat the water within the warm tank 40. The warm tank 40 further connects to the cavity inlet 26 through which steam may exit the warm tank 40 and enter the cooking chamber 14. (While not shown, in some examples, a phase separator may be provided between the warm tank 40 and the cooking chamber 14 to aid in separation of the steam from the water as heated.) The warm tank 40 also includes a drain connection to a drain device 44, which in turn feeds remaining water from the warm tank 40 back around the loop to the fill device 34, or in the alternative to the outlet 30 to drain the loop 32. A controller 46 may be configured to control the operation of the components of the steam generator 22, such as the fill device 34, the water flow control device 38, the heating element 42, and the drain device 44.

It should be noted that the loop 32 as illustrated is intended to show the flow direction and example ordering of the components of the steam generator 22. However, the specific horizontal and vertical orientation of the elements may vary. Moreover, while the loop 32 is illustrated as including water conduit between each of the components, in some examples components of the loop 32 may be directly connected without intervening conduit.

The fill device 34 may be a pump or other water pumping device configured to receive water at a suction side from the water inlet 28 via the loop 32, and selectively provide that water on a discharge side to the one or more cold tanks 36. The water pumping action may be performed using various designs, such as an internal impeller, rotary vanes, a reciprocating plunger or membrane, or a set of rotating gears or lobes, as some non-limiting examples.

In anticipation of operation of the steam generator 22, the fill device 34 may be directed by the controller 46 to aid in supplying the water to fill the cold tanks 36 and/or in providing a constant predefined amount of water flow to fill the cold tanks 36. The fill device 34 may further include a valve or other actuator controllable by the controller 46 to stop or otherwise prevent the flow of the water to the one or more cold tanks 36, as well as to stop the backflow of water from the one or more cold tanks 36. In other examples, by design the fill device 34 may prevent water flow and/or residual steam flow when not actively pumping. In some cases, if the water inlet 28 receives a pressurized water flow such as from a municipal water system, then the fill device 34 may be optional, as the water entering the loop 32 may have sufficient pressure to fill the cold tanks 36 on its own. However, in other examples, the water inlet 28 may be fed from water manually poured into an opening in the housing 16 (*e.g*., into a reservoir of the cooking appliance 10 from which the water inlet 28 is fed), and as such the fill device 34 may be particularly desirable in ensuring that the cold tanks 36 are filled to capacity.

The one or more cold tanks 36 may be reservoirs configured to maintain available water to be used to generate steam by the steam generator 22. In the illustrated example, two cold tanks 36 are shown, a first cold tank 36A followed in series by a second cold tank 36B. The first cold tank 36A in the illustrated example has a capacity of 0.8L, while the second cold tank 36B in the illustrated example has a capacity of has a capacity of 0.5L. The cold tanks 36 are designed to be modular, meaning that different sizes, shapes, quantities, layouts, and/or orientations of cold tanks 36 may be used to store the available liquid water for use.

For instance, in another application requiring a lesser capacity of cold tank 36 storage, one of the cold tanks 36A or 36B may be omitted or be substituted with a smaller cold tank 36. Or, in an example requiring additional capacity, larger and/or additional cold tank 36 may be included in sequence. It should also be noted that while the cold tanks 36 are shown in series, parallel, series-parallel, ring, or other types of arrangements of cold tanks 36 may be used.

Other design requirements of the cooking appliance 10, in addition to water capacity, may be involved in the determination of the sizes, shapes, quantities, layouts, and/or orientations of the cold tanks 36. For instance, some cooking appliances 10 may have more limited space available within the cooking appliance 10 for use by the cold tanks 36. In such examples, multiple smaller cold tanks 36 may fit within the cooking appliance 10 to meet capacity requirements as opposed to a single cold tank 36 which may not mechanically fit.

The water flow control device 38 may be various types of device configured to control the water flow from the cold tanks 36 into the warm tank 40. In an example, the water flow control device 38 may be an electromechanically operated valve, such as a solenoid valve, ball valve, globe valve, gate valve, etc., that may be controlled by the controller 46 to selectively adjust the water flow. In another example, the water flow control device 38 may be a pump controlled by the controller 46. While not shown, it should be noted that one or more water flow control devices 38 may additionally or alternately be place between the cold tanks 36 (*e.g*., between each cold tank 36) to control the flow of water between the cold tanks 36..

The warm tank 40 may be a reservoir configured to hold water to be heated into steam. As storage of cold water may be performed by the one or more cold tanks 36, the warm tank 40 may be sized significantly smaller than the total system water capacity to be able to generate steam quickly with a small amount of water. By being of smaller size, the water in the warm tank 40 may be heated to temperature such that steam is produced faster and more efficiently than if the warm tank 40 was also used to store the cold water of the system. In one example, the warm tank 40 may be designed with a capacity of 200-400mL, while the overall water capacity of the cold tanks 36 may be on the order of 0.75L to 1.5L or more.

The heating element 42 may be one of various devices configured to heat the water in the warm tank 40 into steam. In an example, the heating element 42 may be a resistive element, e.g., packaged as an electric immersion heater element. In such a design, the element includes an inner wire surrounded by filler material enclosed in a sheath of copper or stainless steel. A controlled relay allows electrical current to flow through the inner wire, and from the wire's resistance, creating heat, which is transferred through the filler material to the outer sheath and is then absorbed by the water. This is only an example, and other designs of resistive heating elements may be used. Moreover, other types of approaches to heating the water are possible, such as a natural gas or propane heating burner (e.g., as such a fuel source may be available to some cooking appliances 10).

Similar to the fill device 34, the drain device 44 may be a pump or other water pumping device. Various designs of pump are contemplated as discussed above with respect to the fill device 34. The drain device 44 may be configured to receive water at a suction side from a drain of the warm tank 40, and selectively provide that water on a discharge side back to the fill device 34 (or in other examples to the outlet 30 for drainage away from the cooking appliance 10). The drain device 44 may be useful to evacuate any residual water from the warm tank 40 once steam production has concluded. This may be desirable, as residual water left in the warm tank 40 may evaporate, producing undesirable scale or contributing to corrosion of the heating elements 42 or of the warm tank 40 itself. Moreover, by pumping the remaining water out of the warm tank 40, that water may be recirculated via the loop 32 back to the cold tanks 36 for later use. As another possible implementation, the drain device 44 may include a valve that is closed during steam production but open after to facilitate drainage via gravity out of the warm tank 40.

The controller 46 may include one or more processors configured to perform instructions, commands, and other routines in support of the operation of the steam generator 22. Such instructions and other data may be maintained in a non-volatile manner using a variety of types of computer-readable storage medium. The computer-readable medium (also referred to as a processor-readable medium or storage) includes any non-transitory medium (e.g., a tangible medium) that participates in providing instructions or other data that may be read by the processor of the controller 46. Computer-executable instructions may be compiled or interpreted from computer programs created using a variety of programming languages and/or technologies, including, without limitation, and either alone or in combination, Java, C, C++, C#, Objective C, Fortran, Pascal, Java Script, Python, Perl, and PL/SQL.

FIG. 3 illustrates an example process 48 for operating the steam system according to an aspect of the disclosure. As mentioned above, the controller 46 may be configured to facilitate the operation of the components of the steam generator 22 to provide steam through the cavity inlet 26 into the cooking chamber 14. In an example, at operation 50 the controller 46 may be programmed to operate the fill device 34 to ensure that the cold tanks 36 are full of water. In some examples, such as those in which water is manually added to the cooking appliance 10, the controller 46 may be further programmed to raise an alert if insufficient water is available to be pumped by the fill device 34 into the cold tanks 36.

The controller 46 may be further programmed to cause steam to be generated responsive to a signal from the cooking appliance 10 requesting steam generation. The steam may be requested, for example, for a cooking mode of the cooking appliance 10. Or, the steam may be requested for a cleaning mode of the cooking appliance 10. Regardless of the reason for the request, as shown at operation 52, the controller 46 may operate the water flow control device 38 to introduce a quality of water from the cold tanks 36 into the warm tank 40. As shown at operation 54, the controller 46 may also activate the heating element 42 to heat the introduced water into steam. As shown at operation 56, the steam may exit the warm tank 40 through the cavity inlet 26 into the cooking chamber 14. As the warm tank 40 is a relatively small size as compared to the overall system water capacity, the steam may be generated quickly as compared to the heating of a greater quantity of the water stored in the cold tanks 36.

In some instances, steam may be requested beyond the instant water capacity of the warm tank 40. In such a case, the controller 46 may operate the water flow control device 38 to introduce a further quality of water into the warm tank 40 for heating and generation of steam. For instance, as shown at operation 58, the controller 46 may utilize a float or other water level sensor to determine whether additional water is required to be added to the warm tank 40. If so, control may return to operation 52 to introduce further water into the warm tank 40. As another possibility, the controller 46 may operate the water flow control device 38 to continuously introduce a trickle or other rate of water into the warm tank 40 from the cold tanks 36 to allow for the constant and efficient production of steam.

The controller 46 may be further programmed to discontinue steam generation as shown at operation 60. This may be responsive to a signal from the cooking appliance 10 requesting the steam generator 22 to stop making steam. Or, this may be a result of completion of the steam request, without requiring additional messaging to the controller 46. Upon completion of the steam generation, the controller 46 may be programmed to activate the drain device 44 to evacuate any remaining water from the warm tank 40 as shown at operation 62. This evacuated water may flow through the loop 32 back to the cold tanks 36 for later use. For instance, the controller 46 may also activate the fill device 34 to draw any recovered water from the warm tank 40 back into the cold tanks 36. The heating element 42 may also be deactivated.

Thus, by using one or more cold tanks 36 and an water flow control device 38 to provide water into a warm tank 40, the water capacity and layout of the steam generator 22 may be configured for the output and packaging requirements of the cooking appliance 10 while also retaining good performance of steam generator for cooking appliance 10 applications. By virtue of the modular design, the steam generator 22 may be fit into different architectures of cooking appliance 10 (*e.g*., combi steam ovens, microwave combi steam ovens, etc.), while at the same time offering good steam rate performance.

While exemplary embodiments are described above, it is not intended that these embodiments describe all possible forms encompassed by the claims. The words used in the specification are words of description rather than limitation, and it is understood that various changes can be made without departing from the spirit and scope of the disclosure. As previously described, the features of various embodiments can be combined to form further embodiments of the invention that may not be explicitly described or illustrated. While various embodiments could have been described as providing advantages or being preferred over other embodiments or prior art implementations with respect to one or more desired characteristics, those of ordinary skill in the art recognize that one or more features or characteristics can be compromised to achieve desired overall system attributes, which depend on the specific application and implementation. These attributes can include, but are not limited to cost, strength, durability, life cycle cost, marketability, appearance, packaging, size, serviceability, weight, manufacturability, ease of assembly, etc. As such, to the extent any embodiments are described as less desirable than other embodiments or prior art implementations with respect to one or more characteristics, these embodiments are not outside the scope of the disclosure and can be desirable for particular applications.

With regard to the processes, systems, methods, heuristics, etc. described herein, it should be understood that, although the steps of such processes, etc. have been described as occurring according to a certain ordered sequence, such processes could be practiced with the described steps performed in an order other than the order described herein. It further should be understood that certain steps could be performed simultaneously, that other steps could be added, or that certain steps described herein could be omitted. In other words, the descriptions of processes herein are provided for the purpose of illustrating certain embodiments, and should in no way be construed so as to limit the claims.

All terms used in the claims are intended to be given their broadest reasonable constructions and their ordinary meanings as understood by those knowledgeable in the technologies described herein unless an explicit indication to the contrary is made herein. In particular, use of the singular articles such as "a," "the," "said," etc. should be read to recite one or more of the indicated elements unless a claim recites an explicit limitation to the contrary.

The abstract of the disclosure is provided to allow the reader to quickly ascertain the nature of the technical disclosure. It is submitted with the understanding that it will not be used to interpret or limit the scope or meaning of the claims. In addition, in the foregoing Detailed Description, it can be seen that various features are grouped together in various embodiments for the purpose of streamlining the disclosure. This method of disclosure is not to be interpreted as reflecting an intention that the claimed embodiments require more features than are expressly recited in each claim. Rather, as the following claims reflect, inventive subject matter lies in less than all features of a single disclosed embodiment. Thus, the following claims are hereby incorporated into the Detailed Description, with each claim standing on its own as a separately claimed subject matter.

While exemplary embodiments are described above, it is not intended that these embodiments describe all possible forms of the invention. Rather, the words used in the specification are words of description rather than limitation, and it is understood that various changes may be made without departing from the spirit and scope of the invention. Additionally, the features of various implementing embodiments may be combined to form further embodiments of the invention.

## Claims

1. A steam generator (22) for a cooking appliance (10), comprising:
a warm tank (40) having a water inlet (28);
a heating element (42) configured to heat water in the warm tank (40) to produce steam to be directed into an oven cavity (14) of the cooking appliance (10); and
one or more cold tanks (36, 36A, 36B) connected to a supply of water and an output configured to provide water to the water inlet (28) of the warm tank (40).

2. The steam generator (22) of claim 1, wherein the one or more cold tanks (36, 36A, 36B) include:
a first cold tank (36A) having an input connected to the supply of water and an output; and
a second cold tank (36B) having an input connected to the output of the first cold tank (36A) and an output configured to provide the water to the water inlet (28) of the warm tank (40).

3. The steam generator (22) of claim 2, further comprising:
a water flow control device (38) disposed between the cold tanks (36, 36A, 36B) and the water inlet (28) of the warm tank (40); and
a controller (46) programmed to control a state of the water flow control device (38) to supply water from the cold tanks (36, 36A, 36B) into the warm tank (40).

4. The steam generator (22) of claim 3, wherein the controller (46) is further programmed to control the water flow control device (38) to continuously introduce a fixed rate of water into the warm tank (40) from the cold tanks (36, 36A, 36B) for consistent production of steam.

5. The steam generator (22) of claim 3, wherein the controller (46) is further programmed to control the water flow control device (38) to periodically introduce a quantity of water into the warm tank (40) from the cold tanks (36, 36A, 36B) for consistent production of steam.

6. The steam generator (22) of claim 2, further comprising:
a water flow control device (38) disposed between the first cold tank (36A) and the second cold tank (36B); and
a controller (46) programmed to control a state of the water flow control device (38) to supply water between the first cold tank (36A) and the second cold tank (36B).

7. The steam generator (22) of claim 2, wherein the first cold tank (36A) is configured to hold a first quantity of water, and the second cold tank (36B) is configured to hold a second quantity of water different from the first quantity of water.

8. The steam generator (22) of claim 2, wherein the warm tank (40) is configured to hold a smaller quantity of water than either the first cold tank (36A) or the second cold tank (36B).

9. The steam generator (22) of claim 2, wherein the warm tank (40) includes an outlet (30), and further comprising a drain device (44) configured to withdraw remaining water from the warm tank (40) after steam production.

10. The steam generator (22) of claim 9, wherein the drain device (44) includes an outlet (30) such that the remaining water is recirculated back to the one or more cold tanks (36, 36A, 36B).

11. The steam generator (22) of claim 9, wherein the drain device (44) includes an outlet (30) such that the remaining water can be drained.

12. The steam generator (22) of claim 9, wherein the drain device (44) is a pump.

13. The steam generator (22) of claim 1, further comprising a fill device (34) configured to fill the one or more cold tanks (36, 36A, 36B) from a water supply.

14. The steam generator (22) of claim 13, wherein the fill device (34) is a pump.

15. A method for steam generation for the cooking appliance (10) of claim 1, comprising:
operating a fill device (34) to fill a plurality of cold tanks (36, 36A, 36B) from a water source;
operating a water flow control device (38) to introduce a quality of water from the plurality of cold tanks (36, 36A, 36B) into the warm tank (40);
activating the heating element (42) of the warm tank (40) to heat the introduced water into steam; and
providing the steam through a cavity inlet (26) into a cooking chamber (14) of the cooking appliance (10).
